# EUROPEAN PATENT APPLICATION

(11) **EP 0 540 479 A1**
(43) Date of publication of application: **05.05.1993**
(21) Application number: 92830529.1
(22) Date of filing: 25.09.1992
(51) Int. Cl.: B62M 11/04, B62M 11/16

(54) **A drive wheel, in particular for a children's cycle**

(30) Priority: 31.10.1991 IT BO910406
(71) Applicant: Montanelli, Enea, I-40127 Quatro Inferiore (Bologna) (IT)
(72) Inventor: Montanelli, Enea, I-40127 Quatro Inferiore (Bologna) (IT)
(74) Representative: Pederzini, Paolo

(57) **Abstract**

In a drive wheel intended essentially for a child's tricycle, where propulsion is generated typically by pedals coupled directly to a relative axle (14), the conventional 1:1 ratio between the revolutions of the pedals and the revolutions of the wheel can be widened by engaging intermediate gears (4, 9) to connect a fixed driving member (1) at the hub with a final driven member (5) attached to the rim (10); direct drive is obtained by operating a lever to disengage the intermediate gears and couple the driving member (1) straight to the centre disk (8), thus by-passing the lower ratio.

## Description

The present invention relates to a drive wheel, in particular for a children's cycle, incorporating a speed changer by means of which to vary the ratio between the revolutions described by the axle of the wheel and the revolutions described by the part of the wheel in contact with the ground.

Vehicles of the type in question are most commonly tricycles for which the means of propulsion consist in pedals applied directly to the hub of a single drive wheel positioned forwardmost.

The rider must produce one full revolution of the pedals in order to produce a full revolution of the drive wheel, and in practice the ratio between the revolutions made by the pedals and the revolutions made by the wheel is always the same, i.e. 1:1. The possibility of applying different forces for propulsion purposes is obtainable solely by varying the ratio between the length of the pedal crank and the radius of the wheel, the ratio remaining fixed following construction of the vehicle.

Thus, there is a variety of cycles produced, each requiring a given degree of pedal effort to produce propulsion, but none in which the pedal effort can be varied to suit different riders or accommodate different ground conditions.

Moreover, the pedals and drive wheel are rigidly associated in vehicles of the type in question, and the feet of the rider need to be removed from the pedals in situations where no cranking effort is required for the vehicle to roll, for example when pushed, pulled or free-wheeled down a gradient, and the rider is not disposed to follow the movement of the pedals with his or her lower limbs.

Accordingly, the object of the present invention is to overcome the drawback briefly outlined above. The stated object is realized in a drive wheel as disclosed and characterized by the appended claims, which is suitable in particular for a children's cycle and incorporates a speed change facility such as will permit of varying the ratio between the revolutions made by the axle of the wheel and the revolutions made by the part of the wheel rotating in contact with the ground, and thus of extracting maximum advantage from the vehicle according to the strength of the rider and the nature of the ground.

A further advantage of the invention is that the rotation of the driving axle can be uncoupled from that of the wheel, thereby allowing the vehicle to be free-wheeled in safety, i.e. pushed or pulled or coasted downhill with the rider needing neither to continue pedalling as the wheel rotates nor to lift the lower limbs clear of the pedals.

In addition, with the particular solution adopted, the part of the wheel in contact with the ground can be made to rotate in the direction opposite to that of the axle.

The invention will now be described in detail, by way of example, with the aid of the accompanying drawings, in which:
- fig 1 illustrates part of a vehicle for which the wheel disclosed might be utilized, viewed in a side elevation with certain parts cut away and shown in section better to reveal others;
- fig 2 shows the section through II-II, fig 1, in a first possible embodiment;
- fig 3 shows the section through II-II, fig 1, in a second possible embodiment;
- fig 4 is a schematic illustration of the positions that might be assumed by at least one change gear mounted to a cover illustrated in fig 2;
- fig 5 is a schematic illustration of the positions that might be assumed by change gears mounted to a cover, in an embodiment which allows of obtaining a plurality of ratios between the revolutions of the wheel and the revolutions of the relative axle;
- fig 6 is a schematic illustration of the positions that might be assumed by change gears mounted to a cover, in an embodiment which allows of obtaining rotation of the wheel in the direction opposite to that of the relative axle.

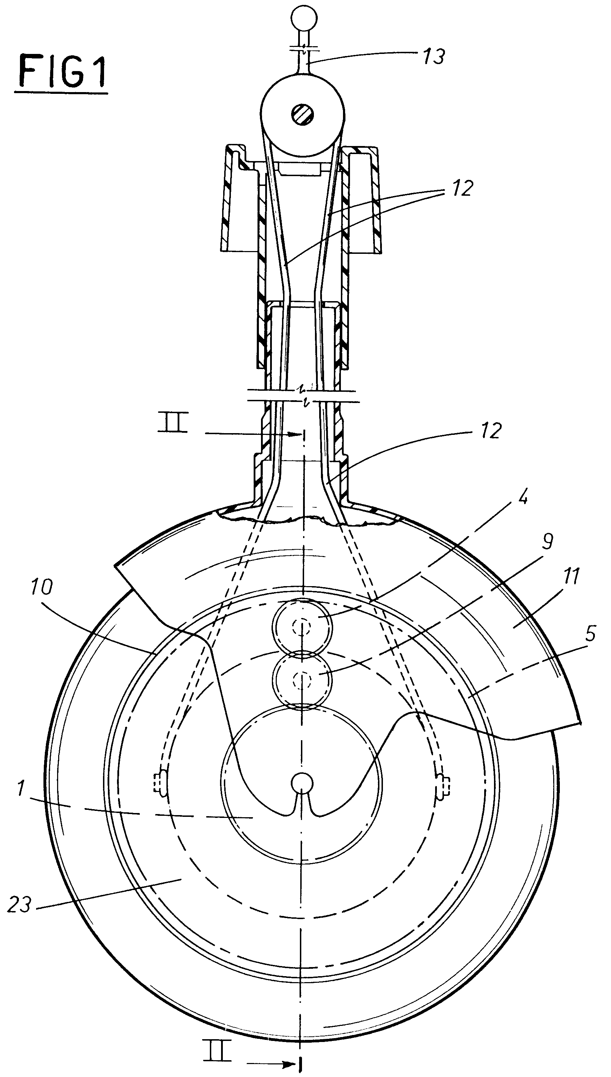

With reference to figs 1, 2 and 4 of the drawings, 1 denotes a gear occupying a central position in the drive wheel according to the present invention, keyed to and slidable along the relative axle 14; the periphery of the gear affords a given number of teeth, and a plurality of pin-like projections 2 of which the longitudinal axes are disposed parallel with and at identical distance from the axle 14. 5 denotes an internally toothed ring gear occupying a peripheral position in the wheel and associated rigidly with the outer rim 10, of which the teeth converge on the centre of the axle.

The ring gear 5 engages in constant mesh with a pinion 4 supported freely by a fixed disk 6 rigidly associated with the front fork 11 of the cycle. 9 denotes a change gear located internally of the wheel, mounted to a cover denoted 7 and rotatable about an axis displaced radially from that of the wheel axle; the gear 9 in question meshes with the central or driving gear 1, which rotates as one with the axle 14.

The cover 7 incorporates a central element 15 of square section directed toward the interior of the wheel, which affords frontal coupling surfaces of angled profile.

16 denotes a coupling element mounted slidably to the axle 14, of which the profile is complementary to that of the element 15 afforded by the cover 7; more exactly, the second coupling element 16 offers a projecting surface to the re-entrant surface of the fixed element 15 and is capable of translatory movement back and forth along the axle 14, though inhibited from rotation by the disk 6 due to the fixed association between the disk and the fork 11. 23 denotes an external cap associated with the side of the wheel farthest from the disk 6 carrying the pinion 4, which encases the flank of the wheel in its entirely and is lodged stably in the rim 10. The cap 23 encases a further disk 8 rotatable about the axle 14 and affording a plurality of radially disposed sockets 3, each separated from the axle 14 by a distance identical to that which separates the projections 2 of the driving gear 1 from the axle. The number, size and positioning of the sockets 3 will be determined by the number, size and angular distance between centres of the projections 2 of the gear 1, and in such a manner that the entire set of projections can be inserted into the sockets simultaneously.

17 denotes a coil spring coaxially ensheathing the axle 14, seated between and interacting with the disk 8 affording the sockets 3, which occupies a fixed axial position in relation to the axle 14, and the gear 1 affording the projections 2, which is capable of translatory movement along the axle, in such a way that the gear 1 is urged constantly toward the fixed disk 6. The ends of the spring 17 are seated against respective washer elements 18 having a low coefficient of friction.

13 denotes a control lever associated with a part of the cycle which might be the handlebar, as shown in fig 1, and connected to the cover 7 by way of a cable 12.

The effect of moving the lever 13, which can assume a number of stable positions equal to the envisaged number of ratios plus one or more neutral settings, as will be explained in due course, is to rotate the cover 7 supporting the idle change gear 9 and incorporating the central coupling element 15.

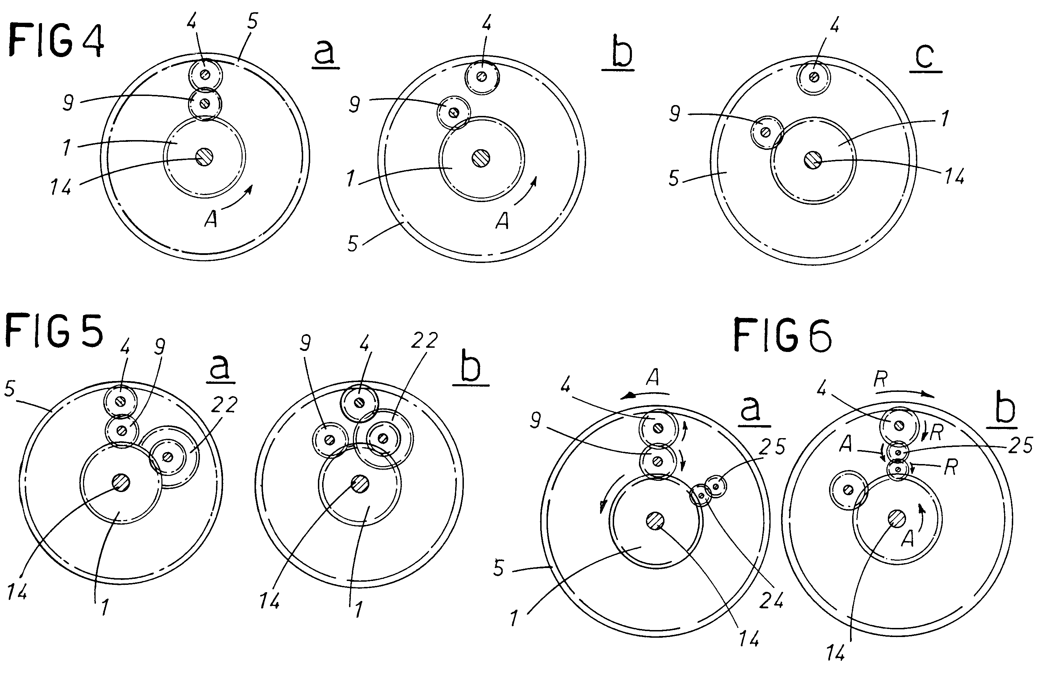

Moving the lever 13 into a stable position whereby the gear 9 associated with the cover 7 assumes the position of fig 4c, direct drive is obtained.

In the example of figs 1, 2 and 4, the selection of direct drive by rotation of the cover 7 occurs as a result of the cam action generated between the surfaces of the coupling elements 15 and 16, which are forced out of alignment and thus spread apart; this causes the driving gear 1 to shift along the axle 14 and toward the rotating disk 8 until the projections 2 locate ultimately in the sockets 3 of the disk 8, at which point the gear 1, rotating as one with the axle 14, is coupled directly to the part of the wheel in contact with the ground. Moving the lever 13 into a stable position whereby the gear 9 associated with the cover 7 assumes the position of fig 4a, a different drive ratio can be obtained.

In this instance, rotation of the cover 7 causes the two coupling elements 15 and 16 to interact by engaging fully; accordingly, the driving gear 1 is not translated against the spring but remains urged toward the cover 7, separated from the direct drive disk 8. Instead, the change gear 9 is brought into mesh with the pinion 4, which becomes live and thus transmits rotation to the ring gear 5 associated with the rim of the wheel.

Moving the lever 13 to an intermediate position, shown schematically in fig 4b, the drive train can be placed in neutral.

In this instance, the cover 7 is rotated through an angle sufficient for the change gear 9 to disengage from the pinion 4 though not sufficient to distance the coupling elements 15 and 16 by an amount such as would translate the driving gear 1 to a point at which the projections 2 are able to locate in the sockets 3.

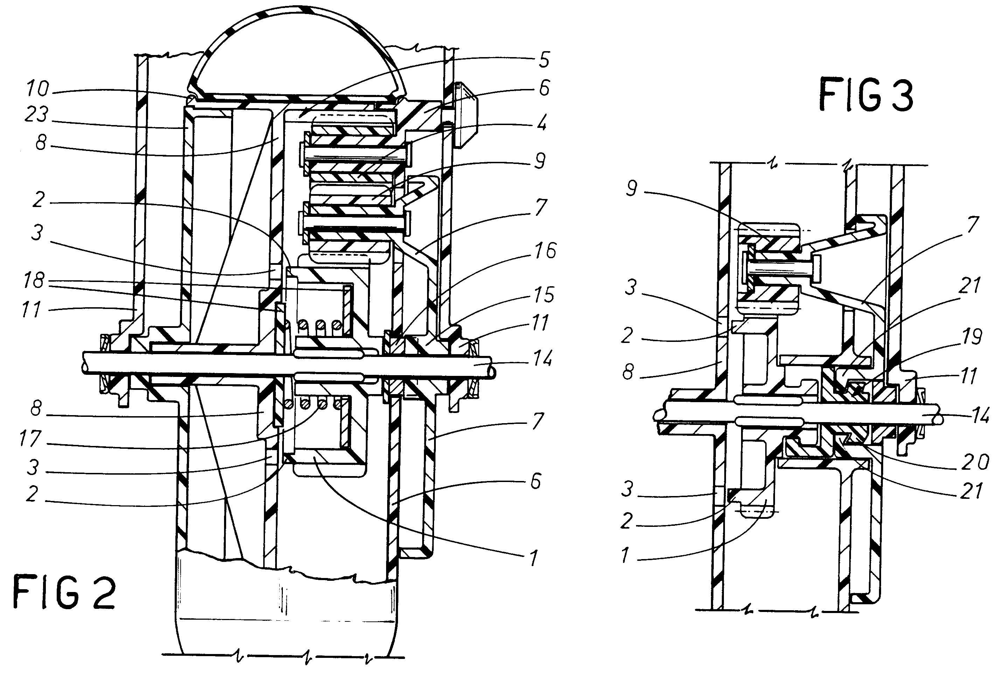

In an alternative embodiment, shown in fig 3, the translatory movement of the driving gear 1 along the axle 14 is produced by means of two brackets 21 afforded by the cover 7, which interact with the helical cam end 20 of a collar 19, slidably and non-rotatably ensheathing the axle 14. The sliding collar 19 interacts in turn with the driving gear 1 in such a way that the two components are harnessed together as one in any movement along the axle 14.

In this embodiment, when the control lever 13 is shifted into the direct drive position, the cover 7 rotates a distance sufficient to lead the cam end 20 of the collar between the brackets 21 through an angle such as will cause the driving gear 1 to move along the axle 14 toward the rotating disk 8; the projections 2 engage the sockets 3 in the manner already described, and the gear 1, rotating as one with the axle 14, is coupled directly to the part of the wheel in contact with the ground.

As regards the selection of a different drive ratio and of the neutral condition, the features already described in relation to the embodiment of figs 1 and 2 remain the same for fig 3, with the positions of the lever 13 producing the same configurations as illustrated in fig 4.

The solution according to the present invention admits of other embodiments, besides those of the examples already described above.

One such embodiment, of which fig 5 schematically illustrates the arrangement of the relative gears, permits of obtaining a greater number of ratios between the revolutions of wheel and axle.

In this instance the cover 7 carries at least one further change gear 22 affording two dissimilar and concentric sets of teeth occupying separate planes, of which one set is identical to that of the change gear 9 already described and engages in constant mesh with the driving gear 1, and the remaining set is caused to mesh with the pinion 4 by rotation of the cover 7 through the appropriate angle.

When the control lever is shifted in such a way as to rotate the gears associated with the cover 7 to the position of fig 5b, the driving gear 1 and the pinion 4 are interconnected by a train, i.e. by the double change gear 22, in which the number of teeth allow transmission of drive at a different ratio to that produced in the situation of fig 5a, by way of the single change gear 9.

Neutral and direct drive configurations are again selected in the manner already described.

The option also exists of adopting a wheel in which the rim might be made to rotate in the opposite direction to the axle by interposing a cluster of gears, in even number, between the driving gear 1 and the pinion 4.

In the example of fig 6, in fact, the cover 7 will be seen to support two gears 24 and 25 in addition to the change gear 9. Of the two gears in question, which might be identical or otherwise, a first 24 meshes permanently both with the driving gear 1 and with the second gear 25, and the second gear 25 can be made to mesh also with the pinion 4, by rotating the cover 7 through an angle such as will produce the configuration shown in fig 6b.

Thus, rotation of the driving gear 1, of which the direction is denoted A in fig 6, can be transmitted either by way of the cluster 24, 25 in such a way as to generate rotation of the rim in the opposite direction R, as shown in fig 6b, or by way of the change gear 9 such that the rim and the axle 14 rotate in the same direction A, as shown in fig 6a. Here again, neutral and direct drive configurations are selected in the manner already described.

The solution of the present invention might also be extended to cycles or vehicles in which propulsion is generated by means other than pedals, provided that such means act directly on the drive hub.

## Claims

**1)** A drive wheel intended in particular for cycles or vehicles in general ridden by children, rotatable about an axle (14) to which pedals or other drive means are applied,
characterized
in that it comprises:
- a plurality of gears constituting a changeable mechanical connection between the axle (14) and the part of the wheel in contact with the ground;
- means mounted to and capable of translatory motion along the axle, associated with or constituting part of a driving member (1) of the plurality of gears and furnished with connectable elements, such as can be made selectively to function as a direct drive coupling between the axle and the part of the wheel in contact with the ground.

**2)** A wheel as in claim 1, wherein the plurality of gears comprises:
- a first driving member (1), consisting in a gear rotatable as one with and capable of translatory movement in either direction along the axle (14) of the wheel;
- a final driven member (5), consisting in a ring gear rigidly associated with the rim (10) of the wheel;
- a freely revolving pinion (4) engaged in constant mesh with the ring gear (5) and supported by an element (6) embodied separately from the wheel.

**3)** A wheel as in claim 2, wherein the driving gear (1) rotatable with the axle (14) of the wheel and the freely revolving pinion (4) rotating in constant mesh with the ring gear (5) rigidly associated with the rim (10) can be interconnected through at least one change gear (9) rotatable in constant mesh with the driving gear (1) about an axis parallel to the axis of the wheel and supported by at least one cover (7) neither connected to the rotation of the wheel nor capable of translatory movement along the axle (14) of the wheel but rotatable selectively about the axle, through the agency of control means (12, 13) associated with a part of the vehicle to which the wheel is attached, in such a way that the change gear (9) can be brought into mesh with the pinion (4) and rotation thus transmitted from the first driving member to the final driven member at a ratio other than 1:1 between the revolutions of the axle and the revolutions of the part of the wheel in contact with the ground.

**4)** A wheel as in preceding claims, wherein means made selectively to function as a direct drive coupling consist in cam means isolated from the rotation of the wheel, comprising at least one element rigidly associated with the cover (7) rotatable selectively about the axle (14) of the wheel, and at least a further element designed to interact with the gear (1) constituting the driving member and capable of translatory motion along the axle together with the gear, disposed in such a way that the two elements can be distanced by the rotation of the cover (7), and the element capable of translatory motion thus shifted along the axle together with the gear (1) toward a position of positive interaction in which a plurality of slender projections (2) afforded by the gear (1), of which the longitudinal axes lie parallel with and equidistant from the axle of the wheel, are insertable singly into a plurality of corresponding sockets (3) afforded by a disk (8) rigidly associated with the part of the wheel in contact with the ground.

**5)** A wheel as in claim 4, wherein cam means consist in two coupling elements (15, 16) affording frontal coupling surfaces of angled profile.

**6)** A wheel as in claim 4, wherein cam means consist in two screw-coupled elements (19, 21).

**7)** A wheel as in claims 3 and 4, wherein the cover (7) is rotated by control means comprising at least one cable (12) connected to the cover, and a lever (13) associated with a part of the vehicle to which the wheel is attached, able at any one time to assume one of a plurality of distinct stable positions including, at least, a position selecting direct drive in which the driving gear (1) is coupled to the disk (8) rigidly associated with the part of the wheel in contact with the ground, a position selecting indirect drive in which the driving gear (1) is coupled to the wheel rim (10) by way of the change gear (9), thereby obtaining a transmission ratio other than 1:1 between the revolutions made by the axle and the revolutions made by the part of the wheel in contact with the ground, and a neutral position in which the driving gear is coupled to no other transmission component.

**8)** A wheel as in claim 7, wherein the lever (13) is associated with means by which to retain distinct stable positions corresponding to the selection of different drive ratios between revolutions made by the axle of the wheel and revolutions made by the part of the wheel in contact with the ground, and of configurations in which the axle of the wheel is isolated from the rotation of the part of the wheel in contact with the ground.

**9)** A wheel as in claim 2, wherein the driving gear (1) rotatable with the axle (14) of the wheel and the freely revolving pinion (4) rotating in constant mesh with the ring gear (5) rigidly associated with the rim (10) can be interconnected by way of an even-numbered plurality of change gears (24, 25) of which the selection, with direct drive deselected, causes the part of the wheel in contact with the ground to rotate in the direction (R) opposite to the rotation (A) of the relative axle.
